# EUROPÄISCHE PATENTSCHRIFT

(11) **EP 4 392 743 B1**
(45) Veröffentlichungstag und Bekanntmachung des Hinweises auf die Patenterteilung: **06.11.2024**
(21) Anmeldenummer: 22768321.6
(22) Anmeldetag: 18.08.2022
(51) Int. Cl.: G01D 11/30

(54) **VERFAHREN ZUR BEFESTIGUNG EINES GEHÄUSES FÜR EIN MESSGERÄT DER PROZESS- ODER AUTOMATISIERUNGSTECHNIK AN EINER WANDUNG**
METHOD FOR FASTENING A HOUSING FOR A MEASURING DEVICE OF PROCESS OR AUTOMATION TECHNOLOGY TO A WALL
PROCÉDÉ DE FIXATION D'UN BOÎTIER POUR UN DISPOSITIF DE MESURE D'UNE TECHNOLOGIE DE PROCESSUS OU D'AUTOMATISATION SUR UNE PAROI

(30) Priorität: 26.08.2021 DE 102021122116
(43) Veröffentlichungstag der Anmeldung: 03.07.2024
(73) Patentinhaber: ifm electronic gmbh, 45128 Essen (DE)
(72) Erfinder: KEMPER, Jan, 88250 Weingarten (DE); HALBINGER, Lorenz, 88353 Kißlegg (DE); KNOLL, Guido, 88239 Wangen (DE)
(74) Vertreter: Ifm Patentabteilung
(86) Internationale Anmeldenummer: PCT/EP2022/073099
(87) Internationale Veröffentlichungsnummer: WO 2023/025659

(56) Entgegenhaltungen:
- WO-A1-00/48438
- DE-U1- 202016 102 166
- DE-U1- 202020 103 546
- US-A1- 2013 293 388

## Beschreibung

Die Erfindung betrifft ein Verfahren zur Befestigung eines Gehäuses für ein Messgerät der Prozess- oder Automatisierungstechnik an einer Wandung.

In der Automatisierungstechnik, insbesondere bei Pneumatikapplikationen, werden häufig Druckmessgeräte eingesetzt. Diese Messgeräte wie eine Vielzahl anderer Sensoren, die zur Überwachung eines Mediums bzw. der Eigenschaft eines Mediums, wie z. B. des Druckes, Temperatur einer Flüssigkeit oder eines Gases, dienen, bestehen meist aus einem als Prozessanschluss bezeichneten Unterteil und einem darauf aufgesetzten Gehäuse, das u. a. zum Schutz des Sensors und der dazu gehörenden Elektronik dient. Der Prozessanschluss stellt die Verbindung des Sensorelements mit einem das Medium führenden Behälter oder Rohr her und beinhaltet meist das Sensorelement selbst.

Meist erfolgt die Montage des Messgeräts auf oder an dem Behälter bzw. Rohr, worin sich das zu messende Medium befindet, in der Form, dass die mechanische Verbindung allein durch den üblicherweise auf dem Anschlussstutzen des Rohrs bzw. Behälters aufgeschraubten Prozessanschluss hergestellt wird. Der Prozessanschluss muss daher über eine entsprechende mechanische Stabilität verfügen, um eine dauerhafte Verbindung zu gewährleisten. Insbesondere bei Druckmessgeräten werden an die mechanische Stabilität besondere Anforderungen gestellt. Aus diesem Grund wird der Prozessanschluss häufig durch Zerspanung eines Edelstahlwerkstücks hergestellt.

Andererseits gibt es die Möglichkeit, Sensoren an einer Wandung oder auf einer Tragschiene, bspw. einer Hutschiene, zu befestigen. Die mechanische Verbindung wird in diesen Fällen nicht oder nicht ausschließlich über den Prozessanschluss hergestellt. Hierfür gibt es eine Vielzahl an Möglichkeiten, die jedoch in den meisten Fällen ein oder mehrere Zusatzteile, wie z. B. Schellen, Klammern, Wandhalterungen o. dgl. erforderlich machen.

Aus der DE 102008026020 B4 ist ein Druckmessgerät bekannt, das mittels eines sockelartig ausgebildeten Prozessanschlussblocks zur Wand- und Tragschienenmontage geeignet ist. Der dort offenbarte Prozessanschlussblock weist horizontale und vertikale Durchgangsbohrungen auf, durch die entsprechend lange Schrauben geführt werden können, um den Prozessanschlussblock und damit das gesamte Druckmessgerät an eine rückwärtige Wandung oder auf einem Untergrund montieren zu können. Die DE 20 2020 103546 U1 zeigt ein weiteres bekanntes Gehäuse für ein Instrument, welches mittels horizontaler Bohrungen an einer Wandung angebracht wird.

Eine derartige Wandmontage ist jedoch nicht möglich, wenn aus verschiedenen Gründen keine horizontalen Bohrungen möglich sind. Ein Grund dafür könnte bspw. sein, dass es sich um ein kompaktes, quaderförmiges Messgerätegehäuse handelt, bei dem die Vorderseite vollständig von einem Display ausgefüllt ist und sich dadurch kein Platz für derartige Bohrungen ergibt. Ein weiterer Grund könnte sein, dass aus ästhetischen Gründen auf sichtbare Bohrungen bzw. Schraubenköpfe an der Vorderseite verzichtet werden soll.

Aufgabe der Erfindung ist es, auf einfache Weise ein Messgerät der vorgenannten Art ohne horizontale Bohrungen an einer Wandung zu befestigen.

Die Aufgabe wird durch ein Verfahren mit den Merkmalen des Anspruchs 1 gelöst. Vorteilhafte Ausgestaltungen der Erfindung sind in den Unteransprüchen angegeben. Ausgangspunkt des erfindungsgemäßen Verfahrens ist zum einen, dass das Gehäuse des Messgeräts eine quasi-plane Rückseite aufweist, d.h. über wenigstens drei Anschlagpunkten verfügt, mit der es unmittelbar an der Wandung zur Anlage kommen soll und auf der Vorderseite ein Display zur Anzeige von Mess- und Parameterdaten, ggf. mit diversen Bedienelementen, angeordnet ist. Weiterhin weist die Gehäuserückseite wenigstens zwei Schlüsselloch-ähnliche Aussparungen mit einem breiten und einem schmalen Bereich auf. Außerdem weist eine der Seitenflächen und/oder die Oberseite und/oder die Unterseite des Gehäuses - also nicht die Vorderseite - wenigstens zwei schräg durch das Gehäuse verlaufende Bohrungen auf, die mit ihrem Ende auf die Schlüsselloch-ähnlichen Aussparungen stoßen.

Das erfindungsgemäße Verfahren ist dann durch folgende Verfahrensschritte gekennzeichnet:
- Bohren von wenigstens zwei Löchern in die Wand entsprechend des Lochbildes auf der Gehäuserückseite;
- Einschrauben von jeweils einer Innensechskant-Schraube in diese Löcher, mit einem Abstand zwischen Wand und Schraubenkopf, der wenigstens der Dicke der Gehäuserückseite entspricht;
- Aufsetzen des Messgerätegehäuses auf die Wandung, derart, dass die Schraubenköpfe der in der Wand befindlichen Schrauben jeweils durch die breiten Bereiche der wenigstens zwei Schlüsselloch-ähnlichen Aussparungen in der Gehäuserückseite geführt werden;
- Nach-unten-Schieben oder Um-die-eigene-Achse-Verdrehen des Messgerätegehäuses, so dass sich die Schraubenschäfte der wenigstens zwei Schrauben jeweils im schmalen Bereich der wenigstens zwei Schlüsselloch-ähnlichen Aussparungen befinden;
- Einführen eines Sechskantschlüssels mit Kugelkopf in die wenigstens zwei schräg verlaufenden Bohrungen, derart, dass der Kugelkopf in den Innensechskant des Schraubenkopfes eingreift und die jeweilige Schraube angezogen wird.

Das Messgerätegehäuse selbst ist durch dieses Verfahren fest und sicher an der Wandung befestigt, da zum einen die durch die Aussparungen mit ihrer Schlüsselloch-ähnlichen Kontur und das Nach-unten-Schieben bzw. Verdrehen des Messgerätegehäuses die Schraubenschäfte sich jeweils im schmalen Bereich dieser Aussparungen befinden, wodurch bereits eine horizontale Fixierung erreicht ist. Eine absolut stabile Montage wird dann dadurch erreicht, dass die Schrauben fest angezogen werden, was mit Hilfe des Sechskantschlüssels mit Kugelkopf trotz des schrägen Eingreifens des Kugelkopfes in den Innensechskant des Schraubenkopfes möglich ist.

Durch die schräg verlaufenden Bohrungen ist die Vorderseite des Messgerätegehäuses völlig unbeeinträchtigt und kann über die gesamte Fläche ein Display aufnehmen.

Eine vorteilhafte Weiterbildung sieht vor, dass die Innenseite der Gehäuserückseite im Bereich des Übergangs zwischen dem breiten und dem schmalen Bereich der wenigstens zwei Schlüsselloch-ähnlichen Aussparungen jeweils eine Bremskeil-artige Verdickung aufweist, über die die Schraubenköpfe während des Nach-unten-schiebens des Messgerätegehäuses geführt werden. Dadurch wird erreicht, dass das Messgerätegehäuse durch die angezogenen Schrauben nicht nur in axialer Richtung fixiert ist, sondern auch in radialer, weil der Schraubenkopf durch die bremskeil-artige Verdickung an einer Verschiebbarkeit gehindert wird und sich dadurch auch während des Anziehens der Schrauben eine aus der Reibung resultierende Verschiebung des Gehäuses verhindern lässt.

Alternativ zu einer bremskeil-artigen Verdickung könnte der Effekt auch durch eine schräge Ebene erreicht werden, über die die Schraubenköpfe während des Nach-unten-Schiebens bzw. Verdrehens zu schieben sind. Am Ende der schrägen Ebene angelangt rasten die Schraubenköpfe dann gewissermaßen ein und die schräge Ebene wirkt wie ein Widerhaken.

Nachfolgend wird die Erfindung anhand von Ausführungsbeispielen unter Bezugnahme auf die Zeichnungen näher erläutert.

Es zeigen schematisch:
- Figur 1: ein an eine Wandung fixiertes Messgerät der Prozess- oder Automatisierungstechnik,
- Figur 2: eine vergrößerte Darstellung eines Bereichs aus Fig. 1 und
- Figur 3: Darstellung eines Zwischenschritts des erfindungsgemäßen Verfahrens.

Bei der nachfolgenden Beschreibung der bevorzugten Ausführungsformen bezeichnen gleiche Bezugszeichen gleiche oder vergleichbare Komponenten.

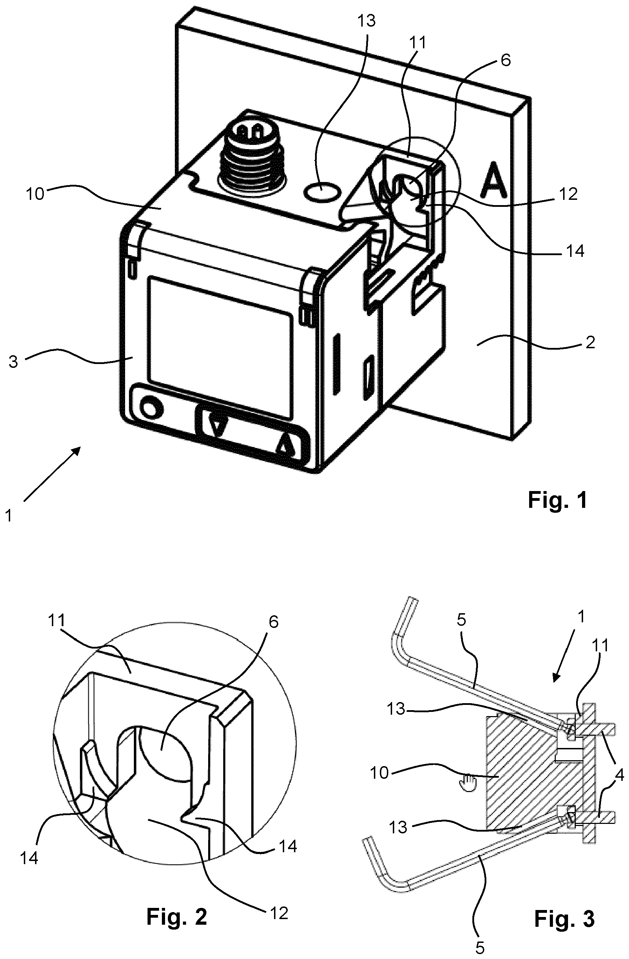

Figur 1 zeigt ein an eine Wandung 2 fixiertes Messgerät 1 der Prozess- oder Automatisierungstechnik, vorliegend ein Druckmessgerät zu Erfassung von Pneumatikdrücken. Das Messgerät 1 hat ein würfelförmiges Gehäuse 10, mit wenigstens einem auf der Unterseite befindlichen (und deswegen nicht dargestellten) Druckanschluss für eine Pneumatikleitung und einem auf der Oberseite ersichtlichen Steckeranschluss zur Weitergabe eines aus dem gemessenen Druck umgewandelten elektrischen Messsignals an eine übergeordnete Steuereinheit, bspw. eine SPS. Die Gehäuseform ist jedoch nicht auf eine würfelförmige Gestalt beschränkt. Denkbar sind alle Formen, bei denen das Messgerät 1, wie in Fig. 1 gezeigt, mit der Gehäuserückseite 11 an der Wandung 2 montiert werden kann. An der oberen rechten Ecke ist das Gehäuse 11 teilweise aufgeschnitten dargestellt.

Das Besondere dieses Messgeräts 1 ist, dass die Vorderseite komplett von einem Display 3 ausgefüllt ist, wobei unter dem Begriff Display nicht nur die reine Anzeigeeinheit zu verstehen ist, sondern auch die dazugehörigen Bedientasten sowie die dargestellten LED-Indikatoren an den beiden oberen Ecken. Das daraus entstehende Problem ist, dass die zur Fixierung des Messgeräts 1 an der Wandung 2 notwendigen Schauben nicht einfach von vorn durch das Messgerätegehäuse 11 durchgeführt werden können. Erfindungsgemäß sind deshalb wenigstens zwei schräg verlaufende Bohrungen 13 vorgesehen, wovon die Öffnung einer dieser Bohrungen 13 auf der Oberseite zu erkennen ist.

Für die Montage des Messgeräts 1 an der Wandung 2 ist es zunächst erforderlich, dass in die Wandung 2 wenigstens zwei Löcher 6 entsprechend des Lochbildes auf der Gehäuserückseite 11 gebohrt werden. In diese Löcher 6 wird jeweils eine Innensechskant-Schraube 4 eingeschraubt, wobei der Abstand zwischen Wand 2 und Schraubenkopf wenigstens der Dicke der Gehäuserückseite 11 entsprechen muss. In Fig. 1 ist lediglich ein Loch 6 dargestellt, ohne Schraube 4. Die Gehäuserückseite 11 weist wenigstens zwei Schlüsselloch-ähnliche Aussparungen 12 mit einem breiten und einem schmalen Bereich auf. Der schmale Bereich befindet sich oben und entspricht von seiner Breite im Wesentlichen dem Durchmesser des Loches 6, während der breite Bereich unterhalb des schmalen Bereichs angeordnet ist und von seiner Breite zumindest dem Durchmesser des Schraubenkopfes entsprechen muss.

Das Messgerätegehäuse 10 wird nun auf die Wandung 2 aufgesetzt, so dass die Schraubenköpfe der in der Wand befindlichen Schrauben 4 jeweils durch die breiten Bereiche der wenigstens zwei Schlüsselloch-ähnlichen Aussparungen 12 geführt werden. Nun wird das gesamte Messgerätegehäuse 11 nach unten geschoben, so dass sich die Schraubenschäfte der Schrauben 4 jeweils in den schmalen Bereichen der Schlüsselloch-ähnlichen Aussparungen 12 befinden. In Fig. 1 ist exakt dieser Moment während des Montageverfahrens abgebildet, wobei wie erwähnt zur besseren Darstellung auf die Schrauben 4 verzichtet wurde.

Alternativ zum Nach-unten-schieben ließen sich die Schraubenschäfte auch durch eine Drehbewegung des Gehäuses 1 um wenige Grad in die schmalen Bereiche der Schlüsselloch-ähnlichen Aussparungen 12 hineinbewegen.

In Figur 3 ist nun sehr schematisch der nächste Verfahrensschritt abgebildet, bei dem jeweils ein Sechskantschlüssel 5 mit Kugelkopf in die zwei schräg verlaufenden Bohrungen 13 eingeführt wurden. Der Kugelkopf des Sechskantschlüssels 5 greift dabei in den Innensechskant des Schraubenkopfes ein, so dass die jeweilige Schraube 4 angezogen werden kann. Damit ist das Messgerät 1 an der Wandung montiert.

Um ein Eindringen von Staub- und Dreckpartikeln zu verhindern, können die Bohrungen 13 an der Oberfläche des Gehäuses 11 mit einem kleinen Deckel verschlossen werden.

Die Verbindung zwischen Messgerät 1 und Wandung 2 kann weiter verbessert werden, indem die Innenseite der Gehäuserückseite 11 im Bereich des Übergangs zwischen dem breiten und dem schmalen Bereich der Schlüsselloch-ähnlichen Aussparungen 12 jeweils eine Bremskeil-artige Verdickung 14 aufweist, über die die Schraubenköpfe während des Nach-unten-schiebens des Messgerätegehäuses 11 geführt werden. In Figur 2, die eine vergrößerte Ansicht des Bereichs der Schlüsselloch-ähnlichen Aussparungen 12 aus Fig. 1 darstellt, sind zwei dieser Bremskeil-artigen Verdickungen 14 zu erkennen. Das fertig montierte Messgerät 1 lässt sich mit dieser Maßnahme nicht mehr so einfach an der Wandung 2 verschieben, was bspw. während des Anschlusses der Pneumatikdruckleitung geschehen könnte. Zur Demontage müssten die Schrauben 4 derart weit herausgeschraubt werden, dass deren Schraubenköpfe über die Bremskeil-artigen Verdickungen 14 geführt werden können, was einen bewussten bzw. gewollten Vorgang voraussetzt und nicht durch ein selbstständiges leichtes Lösen der Schrauben 4 erreicht werden kann.

Der gleiche Effekt ließe sich auch erzielen, wenn statt der bremskeil-artigen Verdickungen eine schräge Ebene vorgesehen ist, über die die Schraubenköpfe während des Nach-unten-Schiebens bzw. Verdrehens zu schieben sind. Am Ende der schrägen Ebene angelangt rasten die Schraubenköpfe dann gewissermaßen ein und die schräge Ebene wirkt ebenfalls wie ein Widerhaken.

Denkbar, von der Erfindung jedoch nicht mit umfasst, ist auch, deutlich kürzere Schrauben 4 als in Fig. 3 darstellt zu verwenden und statt der schräg verlaufenden Bohrungen 13 Ausnehmungen an der Stelle des Messgerätegehäuses 10 vorzusehen, wo sich die Aussparungen zum Durchführen der Schrauben durch die Gehäuserückseite befinden. Durch diese Ausnehmungen hindurch könnten dann ebenfalls die Sechskantschlüssel mit Kugelkopf eingeführt und die Schrauben angezogen werden.

### Bezugszeichenliste

- 1: Messgerät
- 2: Wandung
- 3: Display
- 4: Schraube
- 5: Sechskantschlüssel
- 6: Loch
- 10: Gehäuse des Messgeräts
- 11: Rückseite des Gehäuses
- 12: Schlüsselloch-ähnliche Aussparung
- 13: Bohrung
- 14: Bremskeil-artige Verdickung

## Patentansprüche

1. Verfahren zur Befestigung eines Gehäuses (10) für ein Messgerät (1) der Prozess- oder Automatisierungstechnik an einer Wandung (2),
wobei das Gehäuse (10) eine quasi-plane Rückseite (11) aufweist, mit der das Gehäuse unmittelbar an der Wandung (2) zur Anlage kommen soll und auf der Vorderseite ein Display (3) zur Anzeige von Mess- und Parameterdaten angeordnet ist,
wobei die Gehäuserückseite (11) wenigstens zwei Schlüsselloch-ähnliche Aussparungen (12) mit einem breiten und einem schmalen Bereich aufweist, und wobei eine der Seitenflächen und/oder die Oberseite und/oder die Unterseite des Gehäuses wenigstens zwei schräg verlaufende Bohrungen (13) aufweisen, die mit ihrem Ende auf die Schlüsselloch-ähnlichen Aussparungen (12) stoßen,
**gekennzeichnet durch** folgende Verfahrensschritte:
- Bohren von wenigstens zwei Löchern (6) in die Wandung (2) entsprechend des Lochbildes auf der Gehäuserückseite (11);
- Einschrauben von jeweils einer Innensechskant-Schraube (4) in diese Löcher (6), mit einem Abstand zwischen Wand und Schraubenkopf, der wenigstens der Dicke der Gehäuserückseite (11) entspricht;
- Aufsetzen des Messgerätegehäuses (10) auf die Wandung (2), derart, dass die Schraubenköpfe der in der Wand befindlichen Schrauben (4) jeweils durch die breiten Bereiche der wenigstens zwei Schlüsselloch-ähnlichen Aussparungen (12) in der Gehäuserückseite (11) geführt werden;
- Nach-unten-schieben oder Verdrehen des Messgerätegehäuses (11), so dass sich die Schraubenschäfte der wenigstens zwei Schrauben (4) jeweils im schmalen Bereich der wenigstens zwei Schlüsselloch-ähnlichen Aussparungen (12) befinden;
- Einführen eines Sechskantschlüssels (5) mit Kugelkopf in die wenigstens zwei schräg verlaufenden Bohrungen (13), derart, dass der Kugelkopf in den Innensechskant des Schraubenkopfes eingreift und die jeweilige Schraube (4) angezogen wird.

2. Verfahren nach Anspruch 1,
**dadurch gekennzeichnet, dass** die Innenseite der Gehäuserückseite (11) im Bereich des Übergangs zwischen dem breiten und dem schmalen Bereich der wenigstens zwei Schlüsselloch-ähnlichen Aussparungen (12) jeweils eine Bremskeil-artige Verdickung (14) aufweist, über die die Schraubenköpfe während des Nach-unten-schiebens des Messgerätegehäuses (10) geführt werden.

3. Verfahren nach Anspruch 1,
**dadurch gekennzeichnet, dass** die Innenseite der Gehäuserückseite (11) im Bereich des Übergangs zwischen dem breiten und dem schmalen Bereich der wenigstens zwei Schlüsselloch-ähnlichen Aussparungen (12) jeweils eine schräge Ebene aufweist, über die die Schraubenköpfe während des Nach-unten-schiebens des Messgerätegehäuses (10) geführt werden.

## Claims

1. Method for fastening a housing (10) for a measuring device (1) for process or automation technology to a wall (2),
the housing (10) having a quasi-flat rear side (11) with which the housing is to come into direct contact with the wall (2), and a display (3) for displaying measurement and parameter data being arranged on the front side,
the rear side (11) of the housing having at least two keyhole-like recesses (12) with a wide and a narrow region, and one of the side surfaces and/or the top and/or the bottom of the housing having at least two obliquely extending bores (13) which abut with their end against the keyhole-like recesses (12),
**characterized by** the following method steps:
- drilling at least two holes (6) into the wall (2) according to the hole pattern on the rear side (11) of the housing;
- screwing a hexagon socket screw (4) into each of these holes (6), with a distance between the wall and the screw head which corresponds at least to the thickness of the rear side (11) of the housing;
- positioning the measuring device housing (10) on the wall (2) in such a way that the screw heads of the screws (4) located in the wall are each guided through the wide regions of the at least two keyhole-like recesses (12) in the rear side (11) of the housing;
- pushing downwards or twisting the measuring device housing (11) so that the screw shafts of the at least two screws (4) are each located in the narrow region of the at least two keyhole-like recesses (12);
- inserting a hex key (5) with a ball head into the at least two obliquely extending bores (13) such that the ball head engages in the hexagon socket of the screw head and the screw (4) in question is tightened.

2. Method according to claim 1,
**characterized in that** the inside of the rear side (11) of the housing, in the region of the transition between the wide and the narrow region of the at least two keyhole-like recesses (12), in each case has a brake wedge-like thickening (14) over which the screw heads are guided when the measuring device housing (10) is pushed downward.

3. Method according to claim 1,
**characterized in that** the inside of the rear side (11) of the housing, in the region of the transition between the wide and the narrow region of the at least two keyhole-like recesses (12), in each case has an inclined plane over which the screw heads are guided when the measuring device housing (10) is pushed downward.

## Revendications

1. Procédé pour la fixation d'un boîtier (10) pour un appareil de mesure (1) de la technique des processus ou de l'automatisation sur une paroi (2),
dans lequel le boîtier (10) présente une face arrière (11) quasi-plane, avec laquelle le boîtier doit venir en appui directement sur la paroi (2), et un écran (3) est disposé sur la face avant pour l'affichage de données de mesure et de paramètres,
dans lequel la face arrière de boîtier (11) présente au moins deux évidements (12) en forme de trou de serrure comportant une zone large et une zone étroite, et dans lequel l'une des surfaces latérales et/ou la face supérieure et/ou la face inférieure du boîtier présentent au moins deux alésages (13) s'étendant en oblique qui viennent en butée avec leur extrémité sur les évidements (12) en forme de trou de serrure,
**caractérisé par** les étapes de procédé suivantes :
- perçage d'au moins deux trous (6) dans la paroi (2) conformément au gabarit des trous sur la face arrière de boîtier (11) ;
- vissage de respectivement une vis à six pans creux (4) dans lesdits trous (6), avec une distance entre la paroi et la tête de vis qui correspond à au moins l'épaisseur de la face arrière de boîtier (11) ;
- mise en place du boîtier d'appareil de mesure (10) sur la paroi (2) de telle sorte que les têtes de vis des vis (4) se trouvant dans la paroi sont respectivement guidées dans la face arrière de boîtier (11) par les zones larges des au moins deux évidements (12) en forme de trou de serrure ;
- coulissement vers le bas ou rotation du boîtier d'appareil de mesure (11) de sorte que les tiges de vis des au moins deux vis (4) se trouvent respectivement dans la zone étroite des au moins deux évidements (12) en forme de trou de serrure ;
- introduction d'une clé six pans (5) à tête sphérique dans les au moins deux alésages (13) s'étendant en oblique de telle sorte que la tête sphérique vient en prise dans le six pans creux de la tête de vis et que la vis (4) respective est serrée.

2. Procédé selon la revendication 1,
**caractérisé en ce que** la face intérieure de la face arrière de boîtier (11) présente, dans la zone de la transition entre la zone large et la zone étroite des au moins deux évidements (12) en forme de trou de serrure, respectivement un renflement (14) en forme de coin de freinage sur lequel les têtes de vis sont guidées pendant le coulissement vers le bas du boîtier d'appareil de mesure (10).

3. Procédé selon la revendication 1,
**caractérisé en ce que** la face intérieure de la face arrière de boîtier (11) présente, dans la zone de la transition entre la zone large et la zone étroite des au moins deux évidements (12) en forme de trou de serrure, respectivement un plan incliné sur lequel les têtes de vis sont guidées pendant le coulissement vers le bas du boîtier d'appareil de mesure (10).
